**Europäisches Patentamt**

**European Patent Office**

**Office européen des brevets**

(19)

(11) Veröffentlichungsnummer : **0 049 762**
**B1**

# (12) EUROPÄISCHE PATENTSCHRIFT

(45) Veröffentlichungstag der Patentschrift :
**11.04.84**

(21) Anmeldenummer : **81107107.5**

(22) Anmeldetag : **10.09.81**

(51) Int. Cl.³ : **C 02 F  1/38, C 02 F  1/58,**
**C 02 F  1/72**

(54) **Verfahren zur Aufarbeitung von phosphorhaltigem Abwasser.**

(30) Priorität : **10.10.80 DE 3038336**

(43) Veröffentlichungstag der Anmeldung :
**21.04.82 Patentblatt 82/16**

(45) Bekanntmachung des Hinweises auf die Patenterteilung : **11.04.84 Patentblatt 84/15**

(84) Benannte Vertragsstaaten :
**DE FR NL**

(56) Entgegenhaltungen :
**DE-A- 1 584 851**
**DE-A- 2 847 531**
**DE-B- 1 216 250**

(73) Patentinhaber : **HOECHST AKTIENGESELLSCHAFT**
**Postfach 80 03 20**
**D-6230 Frankfurt am Main 80 (DE)**

(72) Erfinder : **Diskowski, Herbert, Dr.**
**Fasanenaue 6**
**D-5042 Erftstadt (DE)**
Erfinder : **Krause, Johannes, Dr.**
**Gernotstrasse 5**
**D-5030 Hürth-Hermülheim (DE)**
Erfinder : **Mandelkow, Dietrich**
**Gartenstrasse 21**
**D-5030 Hürth-Knapsack (DE)**

Verfahren zur Aufarbeitung von phosphorhaltigem Abwasser

Die vorliegende Erfindung betrifft ein Verfahren zur Aufarbeitung von phosphorhaltigem Abwasser durch Filtration mit Hilfe eines Filterhilfsmittels in einem Zentrifugalfilter.

Es ist bekannt, den Phosphor aus bei der elektrothermischen Phosphorproduktion anfallendem Abwasser in Eindickern nach Zusatz von hochmolekularen Proteinen bei einem pH-Wert von etwa 5,8 auszufällen. Die Teilneutralisation des einen pH-Wert von 1,5 bis 2 ausweisenden Phosphor-Rohwassers wird dabei durch Zugabe von Soda bewirkt. Zur Vermeidung von aus vorzugsweise Kieselsäure bestehenden Inkrustierungen wird weiterhin Ton zugesetzt (vergl. « Sewage and Industrial Wastes », Band 28 (1956), Seiten 70 bis 77).

Beim Verfahren zur Aufarbeitung von Phosphorschlamm enthaltendem Abwasser nach der DE-C 18 08 541 wird das Abwasser durch Zusatz von Kalkhydrat auf pH-Werte von 4 bis 6 eingestellt. Das teilneutralisierte Abwasser wird in einem Zentrifugalfilter mit Hilfe eines Filterhilfsmittels filtriert.

Nachteilig ist bei dem zuerst genannten Verfahren, daß einerseits mit Proteinen ein wertvolles Koagulationsmittel verwendet wird und andererseits der abgetrennte Phosphor zusammen mit anderen Verunreinigungen als Dickschlamm anfällt, dessen Aufarbeitung aufwendig ist. Bei dem zuletzt genannten Verfahren ist von Nachteil, daß mit den Verunreinigungen der gesamte Phosphor abfiltriert wird, wobei die Aufarbeitung des phosphorhaltigen Filterkuchens durch vollständiges Abdestillieren des Phosphors aus ihm aufwendig ist.

Es ist daher Aufgabe der vorliegenden Erfindung, ein Verfahren zur Aufarbeitung von phosphorhaltigem Abwasser durch Filtration anzugeben, bei welchem nur ein kleiner Teil des im Abwasser enthaltenen Phosphors im Filterrückstand zurückgehalten wird. Das wird erfindungsgemäß dadurch erreicht, daß man das Abwasser mit einer Temperatur von mindestens 50 °C und mit einem pH-Wert von 0,5 bis 4,0 dem Zentrifugalfilter zuführt ; daß man das aus dem Zentrifugalfilter austretende Filtrat in einer Beruhigungszone während einer durchschnittlichen Verweilzeit von 10 bis 60 Minuten in gelben Phosphor und Wasser mit einem Phosphorgehalt von 1 bis 30 ppm trennt ; daß man das aus der Beruhigungszone überlaufende Wasser gegebenenfalls mit einem Oxidationsmittel behandelt ; und daß man schließlich das phosphorfreie Abwasser mit einem Neutralisationsmittel umsetzt.

Das Verfahren gemäß der Erfindung kann weiterhin wahlweise auch noch dadurch ausgestaltet sein, daß

a) man das Abwasser dem Zentrifugalfilter mit einer Temperatur von bis zu 75 °C zuführt,

b) man das Abwasser dem Zentrifugalfilter mit einer Temperatur von 60 bis 70 °C zuführt,

c) man das Abwasser mit einem pH-Wert von 2,0 bis 3,5 dem Zentrifugalfilter zuführt,

d) als Oxidationsmittel Luft dient,

e) als Oxidationsmittel Bleichlauge dient,

f) als Neutralisationsmittel Calciummetasilikat verwendet ist,

g) als Calciummetasilikat Phosphorofenschlacke verwendet ist.

Beim erfindungsgemäßen Verfahren wird erreicht, daß durch die Temperatur und den pH-Wert des Abwassers bei des Filtration der größte Teil des in ihm dispergierten Phosphors durch das Zentrifugalfilter hindurchläuft. Weiterhin werden damit wirtschaftlich vertretbare Standzeiten des Zentrifugalfilters erzielt. Beim erfindungsgemäßen Verfahren wird als Filterhilfsmittel vorteilhafterweise Kieselgur verwendet.

Aus dem sauren, Phosphor dispergiert enthaltenden Filtrat setzt sich beim Verfahren gemäß der Erfindung der gelbe Phosphor deshalb offensichtlich ohne Schwierigkeiten ab, weil die die Emulgierung des phosphors im Abwasser begünstigenden Hydrolyseprodukte von Siliciumtetrafluorid im Filterrückstand des Zentrifugalfilters zurückgehalten werden.

Das beim erfindungsgemäßen Verfahren aus der Beruhigungszone ablaufende Wasser enthält nur noch wenige ppm Phosphor. Diese geringe Phosphormenge läßt sich aus dem Wasser leicht durch Oxidation entfernen.

Der beim Verfahren gemäß der vorliegenden Erfindung anfallende Filterrückstand, welcher eine gewisse Menge von elementarem Phosphor enthält, kann in bekannter Weise, z. B. nach dem Verfahren gemäß der DE-C 22 28 636, aufgearbeitet werden.

Bei den folgenden Beispielen wurde phosphorhaltiges Abwasser eingesetzt, welches ca. 400 mg/l Phosphor enthielt.

Filtriert wurde jeweils mit einem Zentrifugalfilter mit 50 m² Filterfläche, auf welches vor der Filtration 40 kg Perlite als Filterhilfsmittel angeschwemmt war. Die Filtrationsgeschwindigkeit mit frisch angeschwemmter Filterhilfsmittelschicht betrug 60 m³/h ; beim Erreichen einer Filtrationsgeschwindigkeit von 30 m³/h wurde die Filtration abgebrochen und der Filterkuchen abgeschleudert. Die zwischen den Filtrationsgeschwindigkeiten 60 m³/h und 30 m³/h vergangene Zeit ist die Standzeit des Zentrifugalfilters.

Das filtrierte und anschließend weitgehend vom Phosphor befreite Abwasser wurde stets mit Calciummetasilikat neutralisiert. Dazu wurden 100 m³/h dieses Abwassers in einem Wasserstrom (2 000 m³/h) injiziert, welcher ca. 1 g/l granulierte Phosphorofenschlacke suspendiert enthielt.

Unabhängig vom pH-Wert des Abwassers wies die Mischung von Abwasser und Wasserstrom einen stets gleichen pH-Wert von 5 auf.

Beispiel 1 (Vergleichsbeispiel)

Phosphorhaltiges Abwasser mit dem pH-Wert 5 und einer Temperatur von 60 °C wurde filtriert. Die Standzeit des Filters betrug 2 Stunden. Das filtrierte Abwasser, welches 240 mg/l Phosphor enthielt, ließ man 60 Minuten in einem Absitzgefäß verweilen. das danach über dem Phosphor überstehende Wasser wies einen Gehalt von weniger als 1 mg/l Phosphor auf und wurde der Neutralisation zugeführt.

Beispiel 2 (Vergleichsbeispiel)

Abwasser mit dem pH-Wert 2 bis 3 und einer Temperatur von 47 °C wurde filtriert. Die Standzeit des Filters betrug 3 Stunden. Das filtrierte Abwasser, welches 40 mg/l Phosphor enthielt, ließ man 30 minuten in einem Absitzgefäß verweilen. Das danach über dem Phosphor überstehende Wasser wies einen gehalt von 20 mg/l Phosphor auf. Durch Zugabe von 200 l/h Bleichlauge (mit ca. 14 % NaOCl) zu 50 m³/h dieses Wassers wurde sein Phosphorgehalt auf weniger als 1 mg/l verringert. Schließlich wurde das Wasser der Neutralisation zugeführt.

Beispiel 3 (Gemäß der Erfindung)

Abwasser mit dem pH-Wert 2 bis 3 und einer Temperatur von 55 °C wurde filtriert. Die Standzeit des Filters betrug 8 Stunden. Das filtrierte Abwasser, welches 290 mg/l Phosphor enthielt, ließ man 30 Minuten in einem Absitzgefäß verweilen. Das danach über dem Phosphor überstehende Wasser wies einen Gehalt von 25 mg/l Phosphor auf. Durch Zugabe von 200 l/h Bleichlauge (mit ca. 14 % NaOCl) zu 50 m³/h dieses Wassers wurde sein Phosphorgehalt auf weniger als 1 mg/l verringert. Schließlich wurde das Wasser der Neutralisation zugeführt.

Beispiel 4 (Gemäß der Erfindung)

Abwasser mit dem pH-Wert 2 bis 3 und einer Temperatur von 60 °C wurde filtriert. Die Standzeit des Filters betrug 8 Stunden. Das filtrierte Abwasser enthielt 330 mg/l Phosphor. Es wurde wie in beispiel 3 angegeben weiter aufgearbeitet.

Beispiel 5 (Gemäß der Erfindung)

Abwasser mit dem pH-Wert 2 bis 3 und einer Temperatur von 70 °C wurde filtriert. Die Standzeit des Filters betrug 8 Stunden. Das filtrierte Abwasser, welches 350 mg/l Phosphor enthielt, ließ man 60 Minuten in einem Absitzgefäß verweilen. Das danach über dem Phosphor überstehende Wasser wies einen Gehalt von weniger als 1 mg/l Phosphor auf und wurde der Neutralisation zugeführt.

Beispiel 6 (Gemäß der Erfindung)

Abwasser mit dem pH-Wert 1,5 und einer Temperatur von 60 °C wurde filtriert. Die Standzeit des Filters betrug 8 Stunden. Das filtrierte Abwasser enthielt 330 mg/l Phosphor. Es wurde wie in Beispiel 5 angegeben weiter aufgearbeitet.

## Ansprüche

1. Verfahren zur Aufarbeitung von phosphorhaltigem Abwasser durch Filtration mit Hilfe eines Filterhilfsmittels in einem Zentrifugalfilter, dadurch gekennzeichnet, daß man das Abwasser mit einer Temperatur von mindestens 50 °C und mit einem pH-Wert von 0,5 bis 4,0 dem Zentrifugalfilter zuführt ; daß man das aus dem Zentrifugalfilter austretende Filtrat in einer Beruhigungszone während einer durchschnittlichen Verweilzeit von 10 bis 60 Minuten in gelben Phosphor und Wasser mit einem Phosphorgehalt von 1 bis 30 parts per million trennt ; daß man das aus der Beruhigungszone überlaufende Wasser gegebenenfalls mit einem Oxidationsmittel behandelt ; und daß man schließlich das phosphorfreie Abwasser mit einem Neutralisationsmittel umsetzt.

2. Verfahren nach Anspruch 1, dadurch gekennzeichnet, daß man das Abwasser dem Zentrifugalfilter mit einer Temperatur von bis zu 75 °C zuführt.

3. Verfahren nach Anspruch 1, dadurch gekennzeichnet, daß man das Abwasser dem Zentrifugalfilter mit einer Temperatur von 60 bis 70 °C zuführt.

4. Verfahren nach einem der Ansprüche 1 bis 3, dadurch gekennzeichnet, daß man das Abwasser mit einem pH-Wert von 2,0 bis 3,5 dem Zentrifugalfilter zuführt.

5. Verfahren nach einem der Ansprüche 1 bis 4, dadurch gekennzeichnet, daß als Oxidationsmittel Luft dient.

6. Verfahren nach einem der Ansprüche 1 bis 4, dadurch gekennzeichnet, daß als Oxidationsmittel Bleichlauge dient.

7. Verfahren nach einem der Ansprüche 1 bis 6, dadurch gekennzeichnet, daß als Neutralisationsmittel Calciummetasilikat verwendet wird.

8. Verfahren nach Anspruch 7, dadurch gekennzeichnet, daß als Calciummetasilikat Phosphorofenschlacke verwendet wird.

## Claims

1. Process for working up phosphorus-containing waste water by subjecting it to filtration with the use of a filter aid in a centrifugal filter, which comprises : introducing the waste water with a temperature of at least 50 °C and a pH-value of 0.5 to 4.0 into the centrifugal filter ; separating the filtrate coming from the centrifugal filter in a calming zone during an average sojourn period of 10 to 60 minutes into yellow phosphorus and water containing 1 to 30 parts per million of phosphorus ; treating the water overflowing from the calming zone with an oxidant, if desired ; and ultimately reacting the waste water free from phosphorus with a neutralizing agent.

2. Process as claimed in claim 1, wherein the waste water is introduced into the centrifugal filter at a temperature of up to 75 °C.

3. Process as claimed in claim 1, wherein the waste water is introduced into the centrifugal filter at a temperature of 60 to 70 °C.

4. Process as claimed in any of claims 1 to 3, wherein the waste water is introduced into the centrifugal filter at a pH-value of 2.0 to 3.5.

5. Process as claimed in any of claims 1 to 4, wherein air is used as the oxidant.

6. Process as claimed in any of claims 1 to 4, wherein bleaching liquor is used as the oxidant.

7. Process as claimed in any of claims 1 to 6, wherein calcium metasilicate is used as the neutralizing agent.

8. Process as claimed in claim 7, wherein phosphorus furnace slag is used as calcium metasilicate.

**Revendications**

1. Procédé de traitement complémentaire d'eau résiduaire contenant du phosphore par filtration à l'aide d'un auxiliaire de filtration dans un filtre centrifuge, caractérisé en ce que l'on introduit l'eau résiduaire à une température d'au moins 50 °C et à un pH de 0,5 à 4,0 dans le filtre centrifuge ; on sépare le filtrat sortant du filtre centrifuge dans une zone calmante pendant une durée de séjour moyenne de 10 à 60 minutes en phosphore blanc et en eau d'une teneur en phosphore de 1 à 30 ppm ; on traite éventuellement l'eau débordant la zone calmante par un oxydant ; et, enfin, on fait réagir l'eau résiduaire exempte de phosphore avec un agent de neutralisation.

2. Procédé selon la revendication 1, caractérisé en ce que l'on introduit l'eau résiduaire dans le filtre centrifuge à une température allant jusqu'à 75 °C.

3. Procédé selon la revendication 1, caractérisé en ce que l'on introduit l'eau résiduaire dans le filtre centrifuge à une température de 60 à 70 °C.

4. Procédé selon l'une des revendications 1 à 3, caractérisé en ce que l'on introduit l'eau résiduaire dans le filtre centrifuge à un pH de 2,0 à 3,5.

5. Procédé selon l'une des revendications 1 à 4, caractérisé en ce que l'on utilise l'air comme oxydant.

6. Procédé selon l'une des revendications 1 à 4, caractérisé en ce que l'on utilise la lessive décolorante comme oxydant.

7. Procédé selon l'une des revendications 1 à 6, caractérisé en ce que l'on utilise le métasilicate de calcium comme agent de neutralisation.

8. Procédé selon la revendication 7, caractérisé en ce que l'on utilise une scorie provenant d'un four de phosphore comme agent de neutralisation.